Europäisches Patentamt

European Patent Office

Office européen des brevets

(19)

(11) Veröffentlichungsnummer: **0 285 814 B1**

# (12) EUROPÄISCHE PATENTSCHRIFT

(45) Veröffentlichungstag der Patentschrift: **17.06.92**

(51) Int. Cl.5: **G05B 19/04**

(21) Anmeldenummer: **88103323.7**

(22) Anmeldetag: **04.03.88**

(54) **Variable Parallelschnittstelle, insbesondere für einen Schrauber.**

(30) Priorität: **08.04.87 DE 3711812**

(43) Veröffentlichungstag der Anmeldung:
**12.10.88 Patentblatt 88/41**

(45) Bekanntmachung des Hinweises auf die
Patenterteilung:
**17.06.92 Patentblatt 92/25**

(84) Benannte Vertragsstaaten:
**DE FR IT SE**

(56) Entgegenhaltungen:
**DE-A- 3 542 453**
**FR-A- 2 309 011**
**GB-A- 2 159 987**

(73) Patentinhaber: **ROBERT BOSCH GMBH**
**Postfach 30 02 20**
**W-7000 Stuttgart 30(DE)**

(72) Erfinder: **Layer, August, Dr. Dipl.-Ing.**
**Friedrichsruher Strasse 53**
**W-7110 Öhringen(DE)**
Erfinder: **Krebs, Rudolf**
**Rehhaldenweg 27**
**W-7060 Schorndorf(DE)**

**Beschreibung**

Die Erfindung geht aus von einer Parallelschnittstelle nach der Gattung des Hauptanspruchs. Parallelschnittstellen mit einer gegebenen Zuordnung der Anschlußstifte sind bekannt. Außerdem sind Schrauber zum automatischen Verschrauben von Schrauben und/oder Muttern bekannt, die neben einem Antrieb u.a. Schalt-, Steuer-, Leistungs- und/oder Sensoreinheiten aufweisen. Diese Elemente sind untereinander und, z.B. bei automatischen Fertigungssystemen, außerdem mit einer übergeordneten Betriebsmittelsteuerung verbunden, wobei eine Vielzahl von Verbindungsleitungen nötig ist, denen zahlreiche Steuer- und Kontrollfunktionen zugeordnet sind. Da die Komponenten eines Schraubers je nach Anwendungs-bzw. Schraubfall verschieden zusammengestellt werden, müssen deren Anschluß- und Verbindungsleitungen sowie die Funktionen der Leitungen aufeinander abgestimmt sein.

Aus der DE-OS 35 19 807 ist ein intelligentes Ein-/Ausgabesystem bekannt, bei dem mehrere Ein- und Ausgabemodule von einem programmierbaren Controler gesteuert werden. Jedes Ein-/Ausgabe-Modul kann wahlweise als Eingabeschaltung oder als Ausgabeschaltung programmiert und vom Controler gesteuert werden. Zur Steuerung der Module sind separate Leitungen vorgesehen, die mit dem Controler verbunden sind. Desweiteren hat jedes Eingabe-/Ausgabe-Modul einen Mikrocomputer, mit dem die einzelnen Eingabe-/Ausgabepunkte mittels eines Programms gesteuert werden. Die Schaltungsanordnung ist sehr komplex aufgebaut und wegen der vielen Fehlermöglichkeiten in der Handhabung relativ kompliziert.

In der FR-A 23 09 011 wird eine Ein-/Ausgabeschaltung für ein Datenverarbeitungssystem vorgeschlagen, das in Halbleitertechnik integrierbar ist. Die Ein-/Ausgabeschaltung weist mehrere Eingabe- und Ausgabetore auf, die nach Bedarf programmierbar sind. Die Steuerung der Schaltungsanordnung erfolgt über einen Mikrocomputer mit einem entsprechenden Steuerprogramm. Die Schaltungsanordnung weist sowohl Steuerleitungen als auch Datenleitungen auf. Dadurch ist der Aufwand relativ groß, so daß die Schaltungsanordnung für einfache Steueranwendungen weniger geeignet erscheint.

Eine weitere freiprogrammierbare Steuerung auf der Basis eines Mikroprozessors ist aus der DE-OS 35 42 453 bekannt. Bei der freiprogrammierbaren Steuerung wird ein handelsüblicher 16 Bit-Mikroprozessor (z.B. TI 990/100) verwendet. Der Mikroprozessor wird durch bestimmte Unterprogramme gesteuert, auf die der Anwender wiederholt zurückgreifen kann.

Vorteile der Erfindung

Die erfindungsgemäßte Parallelschnittstelle mit den im Hauptanspruch gekennzeichneten Merkmalen hat demgegenüber den Vorteil, daß bei gegebener Anzahl der Verbindungen deren Funktion als Eingangs-, Ausgangs-oder Kontrolleitung frei wählbar ist. Dadurch können Elemente des Schraubers etwa durch eine Steuerschaltung gesteuert werden, umgekehrt kann durch auf den gleichen Verbindungsleitungen rücklaufende Signale der gesteuerten Elemente die Steuerschaltung von den Elementen beeinflußt werden. Überdies können über dieselben Leitungen Kontrollsignale abgegeben werden.

Durch die in den Unteransprüchen aufgeführten Maßnahmen sind vorteilhafte Weiterbildungen und Verbesserungen der Parallelschnittstelle möglich. Besonders vorteilhaft ist es, daß die Funktionen der Anschlußklemmen programmierbar ist. Dadurch können dieselben Verbindungsleitungen als Eingangsleitungen, Ausgangs- oder Kontrolleitungen dienen.

Zeichnung

Zwei Ausführungsbeispiele der Erfindung sind in der Zeichnung dargestellt und werden in der Beschreibung näher erläutert. Es zeigen:

Figur 1 das Schaltbild eines ersten Ausführungsbeispiels einer Parallelschnittstelle;

Figur 2 das Schaltbild einer Ausgangsschaltung der Parallelschnittstelle gemäß Figur 1;

Figuren 3a, 3b, 3c verschiedene Ausbildungen der Ausgangsschaltung gemäß Figur 2;

Figur 4 das Schaltbild einer Eingangsschaltung der Parallelschnittstelle gemäß Figur 1 und

Figur 5 das Schaltbild eines weiteren Ausführungsbeispiels einer Parallelschnittstelle.

Beschreibung der Ausführungsbeispiele

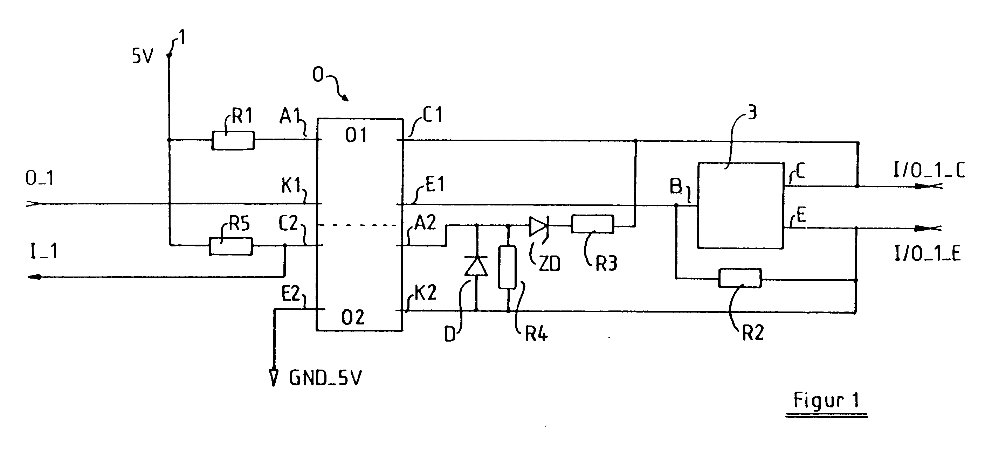

Figur 1 zeigt eine Parallelschnittstelle mit einer zu einer Ausgangsschaltung gehörenden Ausgangsklemme 0_1, die mit einer Eingangsklemme K1 eines ersten als Optokoppler 01 ausgebildeten Kopplungsglieds verbunden ist. Eine weitere Eingangsklemme A1 des Optokopplers 01 führt über einen Widerstand R1 zu einer Klemme 1, an der beispielsweise eine Spannung von 5 V anliegt. Eine erste den beiden Eingangsklemmen K1 und A1 zugeordnete Ausgangsklemme C1 führt zu einer ersten Anschlußklemme I/0_1_C und eine ebenfalls den Eingangsklemmen K1 und A1 zugeordnete zweite Ausgangsklemme E1 zu einer mit B bezeichneten Klemme eines Schaltelements 3. Über einen Widerstand R2 führt eine Verbindungsleitung von der Klemme B zu einer zweiten Anschlußklemme I/0_1 E. Die Anschlußklemme I/0_1_C ist mit einer Klemme C des Schaltelements 3 und die zweite Anschlußklemme I/0_1_E mit einer Klemme E des Schaltelements 3 verbunden.

Aus Figur 1 ist ersichtlich, daß die Anschluβklemmen I/0_1_C und I/0_1_E auch mit den Eingangsklemmen A2 und K2 einen zweiten als Optokoppler 02 ausgebildeten Kopplungsglieds verbunden sind, wobei die erste Anschlußklemme I/0_1_C über einen Widerstand R3 und ein als Zenerdiode ZD ausgebildetes Schaltglied an die Eingangsklemme A2 geführt ist, während die zweite Ausgangsklemme I/0_1_E direkt mit der Eingangsklemme K2 verbunden ist. Die Zenerdiode ZD ist so gepolt, daß sie mit der Anode an der Eingangsklemme A2 liegt. Zwischen den Eingangsklemmen A2 und K2 des zweiten Optokopplers 02 liegen eine Diode D, deren Kathode an der Eingangsklamme K2 angeschlossen ist, sowie ein dazu parallelgeschalteter Widerstand R4.

Von der ersten Ausgangsklemme C2 des Optokopplers 02 führt eine Verbindung direkt zu einer Eingangsklemme I_1 einer Eingangsschaltung und eine weitere Verbindung über einen Widerstand R5 zur Klemme 1, die an 5 V liegt. Die zweite Anschlußklemme E2 ist hier mit Masse verbunden.

Die beiden Optokoppler 01 und 02 können zu einem Kopplungselement 0 zusammengefaßt werden.

Aus Figur 1 ist ersichtlich, daß eine Potentialtrennung zwischen den für 5 V ausgelegten Klemmen 0_1 und I_1 der Ausgangs- bzw. Eingangsschaltung und den für 24 V ausgelegten Anschlußklemmen I/0_1_C, I/0_1_E, die als externe Anschlüsse dienen, besteht.

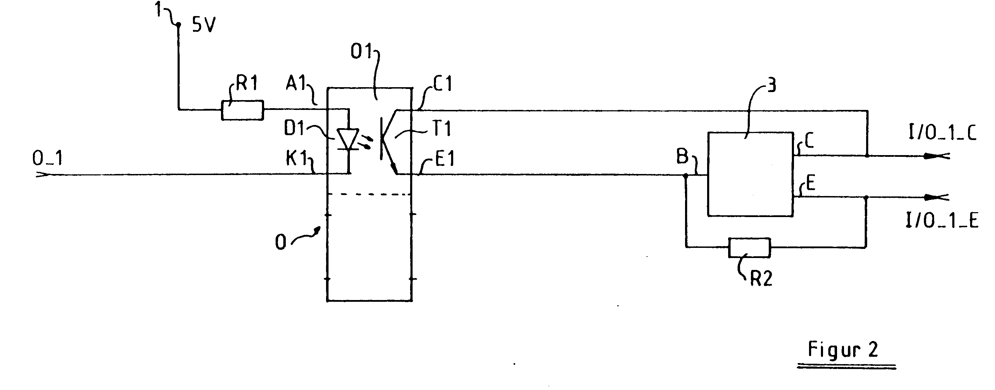

Die Funktion der Ausgangsschaltung wird anhand von Figur 2 erläutert, die aus Gründen der besseren Übersichtigkeit die Ausgangsschaltung der in Figur 1 dargestellten Parallelschnittstelle ohne die Eingangsschaltung zeigt. Gleiche Elemente sind mit identischen Bezugszeichen versehen.

Der Optokoppler 01 weist hier eine mit den Eingangsklemmen verbundene, als Luminiszenzdiode ausgebildete Diode D1 auf, deren Anode an der Eingangsklemme A1 und deren Kathode an der Eingangsklemme K1 liegt. An den Ausgangsklemmen des Optokopplers 01 ist ein Transistor T1 angeordnet, dessen Kollektor mit der ersten Anschlußklemme C1 und dessen Emitter mit der zweiten Anschlußklemme E1 verbunden ist. Durch den Widerstand R2 wird dafür gesorgt, daß die Klemme B des Schaltelements 3 auf demselben Potential liegt wie die Klemme E. Dadurch befindet sich das Schaltelement 3 in nichtleitendem Zustand, wenn der Transistor T1 nichtleitend ist.

Das Schaltelement 3 ist hier als elektronischer Schalter mit den Schaltfunktionen eines Transistors ausgelegt, deshalb entsprechen die Klemmen B, C und E des Schaltelements 3 Basis, Kollektor und Emitter eines Transistors.

Die Steuerung der Ausgangsschaltung erfolgt über an die Ausgangsklemme 0_1 gelegte Signale:

Im ersten Fall wird an die Ausgangsklemme 0_1 ein Potential von 5 V gelegt. Aus Figur ist ersichtlich, daß in diesem Fall das Potential an Anode und Kathode der Diode D1 gleich ist und kein Strom fließt. Dadurch sperren der Transistor T1 und ebenso das Schaltelement 3. Es besteht also keine Verbindung zwischen den Anschlußklemmen I/0_1_C und I/0_1_E.

Im zweiten Fall wird die Ausgangsklemme 0_1 auf 0 V gelegt. Es fließt also ein Strom von der Klemme 1 über den Widerstand R1, die erste Anschlußklemme A1, die Diode D1 und die zweite Anschlußklemme K1. Durch das Licht der Diode wird der Transistor T1 leitend und damit ebenfalls das Schaltelement 3. Das bedeutet, daß die Anschlußklemmen I/0_1_C und I/0_1_E miteinander verbunden sind.

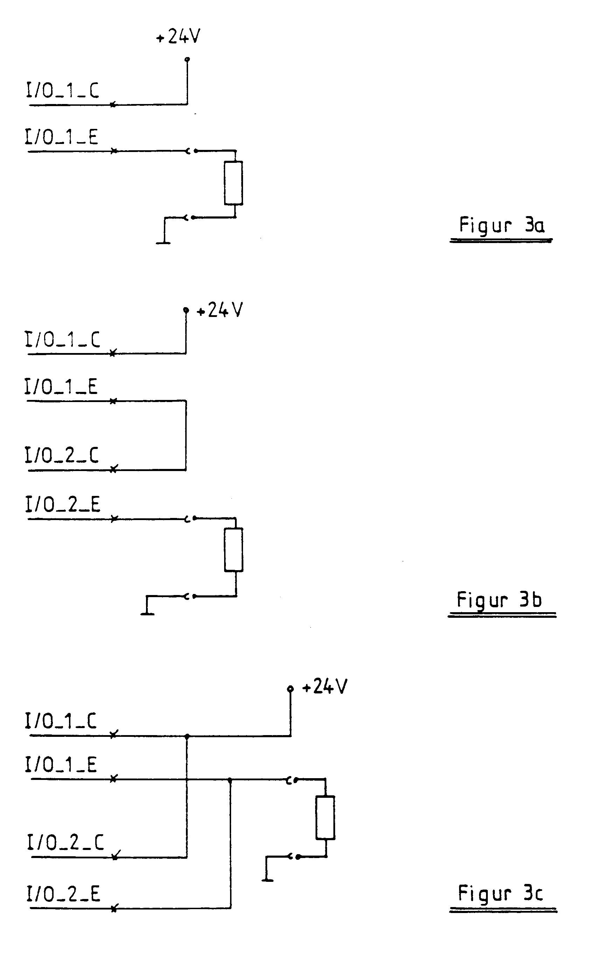

In den Figuren 3a, 3b und 3c sind drei Möglichkeiten der Ausnutzung der Anschlußklemmen gezeigt. Es ist ersichtlich, daß hier die erste Anschlußklemme I/0_1_C mit einer Spannungsquelle von z.B. 24 V verbunden wird, wenn die Parallelschnittstelle gemäß Figur 1 als Ausgangsschaltung verwendet wird.

In Figur 3a wird ein Verbraucher, ein anzusteuerndes Gerät oder ein Element eines Schraubers sowohl mit der zweiten Anschlußklemme I/0_1_E als auch mit einer an Masse liegenden Klemme verbunden.

Der Verbraucher kann nun durch entsprechende Signale, die an die Ausgangsklemme 0_1 gelegt werden, ein- und ausgeschaltet werden.

Nach dem oben Gesagten ergibt sich, daß das Schaltelement 3 die Anschlußklemmen I/0_1_C und I/0_1_E verbindet, der Transistor also leitet, wenn die Ausgangsklemme 0_1 auf 0 V gelegt wird. Dadurch wird der angeschlossene Verbraucher eingeschaltet.

Wird ein Potential von 5 V an die Ausgangsklemme 0_1 gelegt, sperrt das Schaltelement 3, d.h. die 24 V werden nicht an die zweite Anschlußklemme I/0_1_E weitergegeben: Der angeschlossene Verbraucher ist abgeschaltet.

In den Figuren 3b und 3c sind Ausführungsbeispiele mit mehreren Anschlußklemmenpaaren dargestellt, die von getrennten, nicht dargestellten Schaltelementen angesteuert werden. Diese Schaltelemente können ihrerseits von verschiedenen Anschlußklemmen gesteuert werden.

In Figur 3b sind zwei Anschlußklemmenpaare I/0_1_C und I/0_1_E sowie I/0_2_C und I/0_2_E dargestellt, die zu einer UND-Schaltung verknüpft sind, indem die Anschlußklemmen I/0_1_E und I/0_2_C verbunden sind. In diesem Fall wird ein zwischen der Anschlußklemme I/0_2_E und Masse liegender Verbraucher nur eingeschaltet, wenn beide den Anschlußklemmen zugeordnete Schaltelemente in leitendem Zustand sind.

Figur 3c zeigt ein weiteres Ausführungsbeispiel ähnlich dem in Figur 3b gezeigten. Hier liegt jedoch eine ODER-Verknüpfung der Anschlußklemmenpaare vor, d.h. die Anschlußklemmen I/0_1_C und I/0_2_C liegen gemeinsam an einer Klemme mit 24 V und die Anschlußklemmen I/0_1_E und I/0_2_E sind miteinander und mit einer Seite eines Verbrauchers verbunden, der andererseits auf Masse liegt.

Das führt dazu, daß der Verbraucher eingeschaltet wird, wenn auch nur eines der den Anschlußklemmenpaaren zugeordneten Schaltelemente in leitendem Zustand ist.

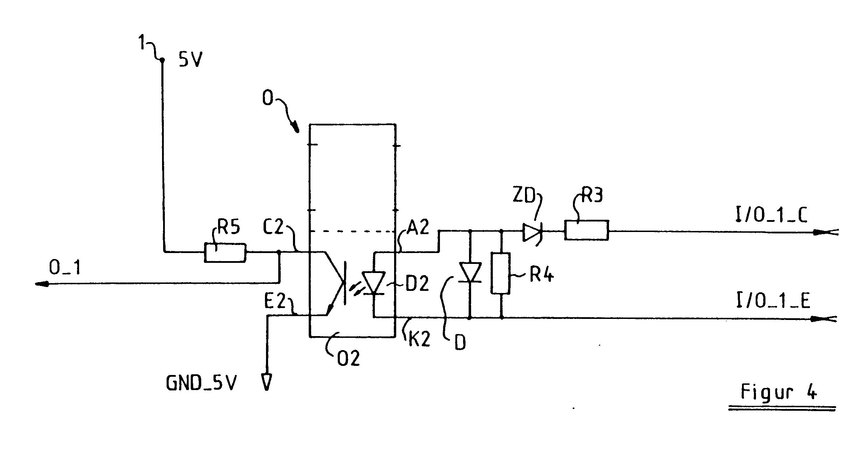

Die Funktion der Parallelschnittstelle gemäß Figur 1 als Eingangsschaltung wird anhand von Figur 4 näher erläutert, die aus Gründen des besseren Verständnisses lediglich die zur Eingangsschaltung gehörenden Elemente wiedergibt. In beiden Figuren übereinstimmende Teile sind mit identischen Bezugszeichen versehen.

Bei dieser Schaltung werden die Signale an der Eingangsklemme I_1 durch Beschaltung der Anschlußklemmen I/0_1_C und I/0_1_E, die hier also den Eingang der Eingangsschaltung bilden, beeinflußt. Auch hier ist eine Potentialtrennung durch das als Optokoppler 02 ausgebildete Kopplungselement vorgesehen. Während der den Anschlußklemmen I/0_1_C, I/0_1_E zugeordnete Schaltungsteil für 24 V ausgelegt ist, ist der der Eingangsklemme I_1 zugeordnete Schaltungsteil für 5 V ausgelegt.

Die Kopplung der Schaltungsteile erfolgt über den Optokoppler 02, der auf seiner Eingangsseite eine zwischen den Eingangsklemmen A2 und K2 liegende Diode D2 mit einer Schutzbeschaltung und auf seiner Ausgangsseite einen zwischen den Klemmen E2 und C2 liegenden Transistor T2 aufweist. Aus der Bezeichnung der Klemmen und aus Figur 2 ist ersichtlich, daß die Kathode der Diode D2 an der Klemme K2 und deren Anode an der Klemme A2 liegt, und daß der Kollektor des Transistors T2 an der Klemme C2 und dessen Emitter an der Klemme E2 angeschlossen ist.

Die Beschaltung der Anschlußklemmen mit den Dioden D und ZD sowie mit den Widerständen R3 und R4 dient der Strombegrenzung und als Schutzbeschaltung.

Wenn die Spannung an den Anschlußklemmen I/0_1_C und I/0_1_E einen vorgegebenen, durch die Beschaltung der Diode 2 bestimmten Wert überschreitet, so fließt ein Strom über den Widerstand R3 und die Zenerdiode ZD durch die Diode D2 des Optokopplers 02. Dadurch wird der Transistor T2 in leitenden Zustand gebracht. Das Potential an der Klemme C2 wechselt von 5 V auf 0 V. Damit findet auch an der Eingangsklemme I_1 eine Potentialänderung statt, nämlich von 5 V, was einer logischen "1" entspricht, auf 0 V, was einer logischen "0" entspricht.

Bleibt die Spannung an den Anschlußklemmen I/0_1_C und I/0_1_E auf 0 V oder unter dem genannten Schwellenwert, so bleibt die Diode D2 stromlos, wodurch der Transistor T2 sperrt. Das Potential an der Klemme C2 ist demnach, wie das der Eingangsklemme I_1, auf 5 V bzw. auf logisch "1".

Wenn die Parallelschnittstelle als Eingangsschaltung der hier beschriebenen Art verwendet werden soll, muß das Signal an der Ausgangsklemme 0_1 auf logisch "1" stehen, d.h. es müßten 5 V anliegen, damit das Schaltelement 3 nicht in leitendem Zustand ist und die Anschlußklemmen I/0_1_C und I/0_1_E überbrückt. Es zeigt sich nach allem, daß die Eingangsschaltung zur Überwachung der Ausgangsschaltung herangezogen werden kann.

Zur Erläuterung wird auf Figur 3a zurückgegriffen. Bei der Verwendung als Ausgangsschaltung liegt gemäß Figur 3a an der Anschlußklemme I/0_1_C eine Spannung von beispielsweise 24 V.

Wenn in einem ersten Fall an der Ausgangsklemme 0_1 eine logische "1" ansteht, also 5 V anliegen, wird nach dem zu Figur 2 Gesagten das Schaltelement 3 nicht durchgeschaltet, die Verbindung zwischen den Anschlußklemmen I/0_1_C und I/0_1_E ist also offen. Aufgrund der an den Anschlußklemmen liegenden Spannung wird die Eingangsschaltung durchgeschaltet, d.h. das Potential an der Eingangsklemme I_1 liegt auf 0 V.

Wenn im zweiten Fall an der Ausgangsklemme 0_1 eine logische "0", also 0 V anliegt, wird das Schaltelement 3 in den leitenden Zustand gebracht, also eine Verbindung zwischen den Anschlußklemmen I/0_1_C und I/0_1_E hergestellt. Da dann praktisch keine Spannung zwischen den Anschlußklemmen anliegt, bzw. die Spannung unter den für die Eingangsschaltung gegebenen Schwellenwert liegt, steht an der Eingangsklemme I_1 eine logische "1" bzw. eine Spannung von 5 V an.

Bei Verwendung der Parallelschnittstelle als Ausgangsschaltung kann also das Signal der Eingangsklemme I_1 zur Kontrolle der Ausgangsschaltung herangezogen werden.

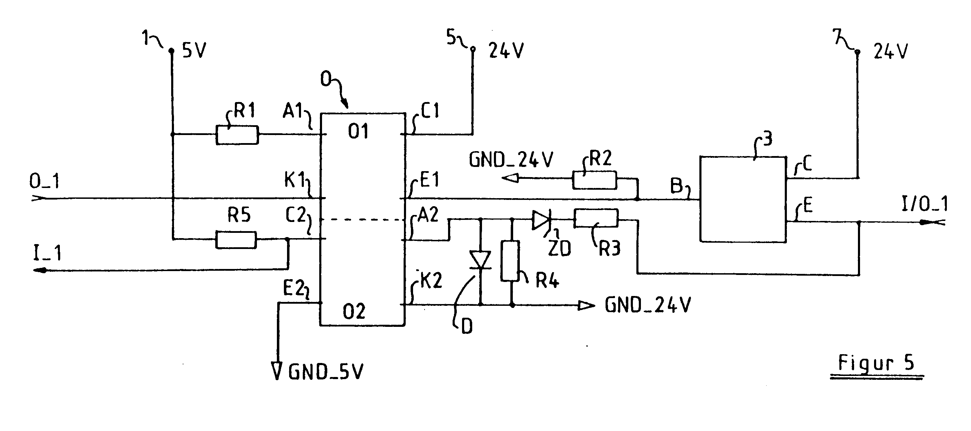

Figur 5 zeigt ein weiteres Ausführungsbeispiel einer Parallelschnittstelle. Sie unterscheidet sich von der in Figur 1 dargestellten dadurch, daß lediglich eine Ausgangsklemme I/0_1 vorgesehen ist. In den Figuren 1 und 5 übereinstimmende Teile sind mit identischen Bezugszeichen versehen.

Die einer Steuerung, z.B. der Schraubersteuerung zugeordneten Klemmen, nämlich die Ausgangsklemme 0__1 und die Eingangsklemme I__1 sowie deren Beschaltung sind unverändert. Der hier nicht dargestellte Transistor T1 des ersten Optokopplers 01 (siehe Figur 2) ist über seinen Kollektor, also die Klemme C1 mit einer Klemme 5 verbunden, an der z.B. 24 V anliegen. Der mit einer Seite an der Verbindungsleitung zwischen dem Emitter des Transistors des ersten Optokopplers 01 bzw. der Klemme E1 und der Klemme B des Schaltelements 3 angeschlossene Widerstand R2 liegt mit seiner anderen Seite an der der 24 V-Spannungsquelle zugeordneten Masse.

Die Klemme C der Schaltung 3 ist mit einer Klemme 7 verbunden, an der ebenfalls eine Spannung von 24 V liegt. Die Klemmen 5 und 7 können auch zusammen an eine gemeinsame 24 V-Spannungsquelle geführt werden.

Mit der Klemme A2 des zweiten Optokopplers 02 bzw. der Anode der hier nicht dargestellten Diode D2, sind, wie in Figur 1, eine Zenerdiode ZD und ein Widerstand R3 verbunden. Dieser ist hier jedoch mit der Klemme E des Schaltelements 3 verbunden, die ihrerseits mit der Anschlußklemme I/0__1 in Verbindung steht.

Die Kathode der Diode D2 bzw. die Klemme K2 des zweiten Optokopplers 02 ist mit der der 24 V-Spannungsquelle zugeordneten Masse verbunden. Zwischen den Klemmen K2 und A2 der Diode D2 liegt, wie in Figur 1, eine Parallelschaltung aus einem Widerstand R4 und einer Diode D, deren Kathode an der Klemme A2 liegt.

Bei der Verwendung dieser Parallelschnittstelle als Ausgangsschaltung wird das Potential an der Anschlußstelle I/0__1 über an die Ausgangsklemme 0__1 gelegte Signale gesteuert:
Im ersten Fall wird das logische Signal "1", nämlich 5 V an die Ausgangsklemme 0__1 gelegt. Dadurch kann kein Strom durch die Diode D1 des ersten Optokopplers 01 fließen, dessen Transistor folglich im gesperrten Zustand ist. Dadurch befindet sich das Schaltelement 3 ebenfalls in gesperrtem Zustand und die an dessen Klemme C liegende Spannung wird nicht an die Klemme E weitergegeben. Die Anschlußklemme I/0__1 weist also ein Potential von 0 V auf.

Im zweiten Fall liegt ein Potential von 0 V an der Ausgangsklemme 0__1, wodurch ein Strom durch die Diode D1 fließt. Dadurch leitet der Transistor T1 und verbindet die an Klemme 5 liegende Spannung mit dem Widerstand R2. Durch die Potentialverschiebung leitet das als Transistor wirkende Schaltelement 3, d.h. die an Klemme 7 liegende Spannung wird über die Klemmen C und E des Schaltelements 3 an die Anschlußklemme I/0__1 weitergegeben. Dort liegen in diesem Fall also 24 V an. Damit kann ein Verbraucher oder ein Element des Schraubers betrieben werden.

Bei der Verwendung der Parallelschnittstelle gemäß Figur 5 als Eingangsschaltung muß das an der Ausgangsklemme 0__1 liegende Potential 5 V betragen, damit das Schaltelement 3 sperrt. Nun kann das Signal der Eingangsklemme I__1 durch an die Anschlußklemme I/0__1 gelegte Spannungen gesteuert werden.

Im ersten Fall wird keine Spannung an die Ausgangsklemme I/0__1 gelegt. In diesem Fall fließt kein Strom durch die Diode D2 des zweiten Optokopplers 02. Der Transistor T2 sperrt folglich. Dadurch liegt ein Potential von 5 V an der Eingangsklemme I__1.

Werden im zweiten Fall 24 V an die Anschlußklemme I/0__1 gelegt, fließt ein Strom durch die Diode D2, der Optokoppler 02 bzw. dessen Transistor T2 ist leitend. Dadurch liegt ein Potential von 0 V an der Ein gangsklemme I__1.

Auch in diesem Fall kann die Eingangsklemme I__1 zur Kontrolle der Ausgangsschaltung herangezogen werden: Wenn aufgrund der Steuerung über die Ausgangsklemme 0__1 keine Spannung an der Anschlußklemme I/0__1 liegt, ergibt sich aufgrund der Rückkopplung ein Signal von 5 V an der Eingangsklemme I__1. Im umgekehrten Fall ergibt sich ein Signal von 0 V an der Eingangsklemme I__1, weil aufgrund der Steuerung über die Ausgangsklemme 0__1 eine Spannung von 24 V an der Anschlußklemme I/0__1 liegt.

Vorteil dieses Ausführungsbeispiels ist es, daß lediglich eine Klemme als Anschlußklemme I/0__1 vorhanden zu sein braucht. Auch in diesem Fall lassen sich durch entsprechende Ansteuerung dieser Anschlußklemme, beispielsweise über geeignete Software, die in den Figuren 3b und 3c dargestellte UND- bzw. ODER-Verknüpfung der Anschlußklemme realisieren.

Bei allen Ausführungsbeispielen ist das Transistorschaltfunktionen aufweisende Schaltelement 3 so ausgelegt, daß der Stromfluß auf beispielsweise maximal 80 mA begrenzt wird. Überdies ist ein thermischer Überlastungsschutz vorgesehen, der bei steigender Temperatur des Bauteils den Strom bis auf 0 A reduzieren kann. Auf diese Weise wird auch bei Überlastung oder Kurzschluß vermieden, daß das Schaltelement zerstört wird. Vorzugsweise wird als Schaltelement 3 ein Schaltelement von National Semiconductors mit der Bezeichnung LP 395 Z verwendet.

**Patentansprüche**

1.  Parallelschnittstelle, die zwischen einer Schraubvorrichtung und einer Steuerung geschaltet ist, mit mindestens einer Ausgangsschaltung (01, R1 3, R2), deren Ausgangsklemme (0-1) mit dem Ausgang der Steuerung und deren Anschlußklemmen (I/O-1-C, I/O-1-E) mit der Schraubvorrichtung verbunden sind und mit einer Eingangsschaltung (02, R3, R4, R5, D, ZD), die eingangsseitig mit der Schraubvorrichtung und ausgangsseitig über eine Eingangsklemme (I-1) mit dem Eingang der Steuerung verbunden ist, dadurch gekennzeichnet,

a) daß die Ausgangsschaltung (01, R1, 3, R2) ein erstes galvanisch trennendes Koppelglied (01) aufweist, das zwischen der Ausgangsklemme (0-1) und einer als Steuereingang wirkenden Klemme B eines Schaltelementes (3) geschaltet ist, daß das Schaltelement (3) ausgangsseitig mit weiteren Klemmen C und E an die Anschlußklemmen (I/O-1-C, I/O-1-E) verbunden ist und daß das Schaltelement (3) über Steuersignale von der Steuerung an den Klemmen C und E in den Zustand 'leitend' oder 'gesperrt' steuerbar ist,

b) daß die Eingangsschaltung (02, R3, R4, R5, D,ZD) eingangsseitig mit den Klemmen C und E des Schaltelementes (3) verbunden ist und daß der Schaltzustand des Schaltelementes (3) auf die Eingangsschaltung (02, R3, R4, R5, D, ZD) übertragbar ist und

c) daß die Eingangsschaltung (02, R3, R4, R5, D, ZD) ein zweites galvanisch trennendes Element (O2) aufweist, über das der Schaltzustand des Schaltelementes (3) an der Eingangsklemme (I-1) an die Steuerung ausgebbar ist.

2. Parallelschnittstelle nach Anspruch 1, dadurch gekennzeichnet, daß das erste und zweite Kopplungsglied (01, 02) als Optokoppler ausgebildet und zu einem Kopplungselement (O) zusammengefaßt sind.

3. Parallelschnittstelle nach Anspruch 1 oder 2, dadurch gekennzeichnet, daß das Schaltelement (3) die Schaltfunktion eines Transistors aufweist.

4. Parallelschnittstelle nach einem der Ansprüche 1 bis 3 gekennzeichnet durch mehrere der Ausgangsschaltung zugeordnete als Ausgang dienende Anschlußklemmen (I/O_1_C, I/O_1_E; I/O_2_C, I/O_2_E) und/-oder mehrere der Eingangssschaltung zugeordnete als Eingang dienende Anschlußklemmen.

5. Parallelschnittstelle nach Anspruch 4, dadurch gekennzeichnet, daß die als Ausgang dienenden Anschlußklemmen (1/O_1_C, I/O_1_E) zu UND- und/oder ODER-Schaltungen zusammenfaßbar sind.

6. Parallelschnittstelle nach einem der Ansprüche 1 bis 5, dadurch gekennzeichnet, daß die Funktion der Anschlußklemmen (I/O_1_C, I/O_1_E) als Ausgang oder Eingang programmierbar ist.

7. Parallelschnittstelle nach einem der vorhergehenden Ansprüche, dadurch gekennzeichnet, daS die Verknüpfung der Ein- und Ausgangsschaltung derart ausgebildet ist, daß bei Verwendung der Parallelschnittstelle als Ausgangsschaltung (01, R1, 3, R2) das an der Ausgangsklemme (I-1) der Eingangsschaltung (02, R3, R4, R5, Z, ZD) anliegende Signal zur Kontrolle der Ausgangsschaltung (01, R1, 3, R2) verwendbar ist.

## Claims

1. Parallel interface, which is connected between a screwing device and a controller, having at least one output circuit (01, R1, 3, R2) whose output terminal (0-1) is connected to the output of the controller and whose connecting terminals (I/O-1-C, I/O-1-E) are connected to the screwing device, and having an input circuit (02, R3, R4, R5, D, ZD) which is connected on the input side to the screwing device and on the output side via an input terminal (I-1) to the input of the controller, characterised in that

a) the output circuit (01, R1, 3, R2) has a first electrically isolating coupling member (01) which is connected between the output terminal (0-1) and a terminal B, acting as a control input, of a switching element (3), in that the switching element (3) is connected on the output side to further terminals C and E on the connecting terminals (I/O-1-C, I/O-1-E) and in that the switching element (3) can be controlled by means of control signals from the controller to the terminals C and E into the 'conducting' or 'cut-off' state,

b) the input circuit (02, R3, R4, R5, D, ZD) is connected on the input side to the terminals C and E of the switching element (3) and in that the switching state of the switching element (3) can be transmitted to the input circuit (02, R3, R4, R5, D, ZD) and

c) the input circuit (02, R3, R4, R5, D, ZD) has a second electrically isolating element (02) via which the switching state of the switching element (3) can be emitted to the input terminal (I-1) on the controller.

2. Parallel interface according to Claim 1, characterised in that the first and second coupling members (01, 02) are constructed as optocouplers and are combined to form a coupling element (0).

3. Parallel interface according to Claim 1 or 2, characterised in that the switching element (3) has the switching function of a transistor.

4. Parallel interface according to one of Claims 1 to 3, characterised by a plurality of connecting terminals (I/O_1_C, I/O_1_E; I/O_2_C, I/O_2_E) which are allocated to the output circuit and act as the output and/or a plurality of connecting terminals, which are allocated to the input circuit and act as the input.

5. Parallel interface according to Claim 4, characterised in that the connecting terminals (I/O_1_C, I/O_1_E) which are used as the output can be combined to form AND- and/or OR-circuits.

6. Parallel interface according to one of Claims 1 to 5, characterised in that the function of the connecting terminals (I/O_1_C, I/O_1_E) can be programmed as the output or input.

7. Parallel interface according to one of the preceding claims, characterised in that the linking of the input and output circuit is constructed in such a manner that when the parallel interface is used as the output circuit (01, R1, 3, R2), the signal applied to the output terminal (I-1) of the input circuit (02, R3, R4, R5, Z, ZD) can be used for monitoring the output circuit (01, R1, 3, R2).

## Revendications

1. Interface parallèle variable, qui est montée entre un dispositif de vissage et une commande, avec au moins un circuit de sortie (01, R1, 3, R2), dont les bornes de sortie (O_1) sont reliées à la sortie de la commande et à ses bornes de raccordement (I/O_1_C, I/0_1_E) avec le dispositif de vissage et avec un circuit d'entrée (O2, R3, R4, R5, D, ZD), qui du côté entrée est relié au dispositif de vissage et du côté sortie est relié via une borne d'entrée (I_1) à l'entrée de la commande, interface caractérisée en ce que :

a- le circuit de sortie (O1, R1, 3, R2) présente un premier organe de couplage (O1) de séparation voltaïque, qui est monté entre la borne de sortie (0_1) et une borne B, fonctionnant comme entrée de commande, d'un élément de commutation (3), en ce que l'élément de commutation (3) est relié au côté sortie par d'autres bornes C et E aux bornes de raccordement (I/O_1_C, I/O_1_E) et en ce que l'élément de commutation (3) peut être mis dans l'état "conducteur" ou "bloqué" par des signaux de commande venant de la commande aux bornes C et E.

b- le circuit d'entrée (O2, R3, R4, R5, D, ZD) est relié du côté de l'entrée aux bornes C et E de l'élément de commutation (3) et l'état de commutation de l'élément (3) peut être transmis au circuit d'entrée (O2, R3, R4, R5, D, ZD) et,

c- le circuit d'entrée (O2, R3, R4, R5, D, ZD) présente un deuxième élément à séparation voltaïque (O2), au moyen duquel l'état de commutation de l'élément (3) peut être sorti en out put à la borne d'entrée (I_1) sur la commande.

2. Interface parallèle variable selon la revendication 1, caractérisée en ce que le premier et le deuxième organe de couplage (O1, O2) sont conçus comme des optocoupleurs et sont rassemblés dans un élément de couplage (O).

3. Interface parallèle variable selon la revendication 1 ou 2, caractérisée en ce que l'élément de commutation (3) présente le fonctionnement de commutation d'un transistor.

4. Interface parallèle variable selon l'une des revendications 1 à 3, caractérisée par plusieurs bornes de raccordement (I/O_1_C, I/O_1_E ; I/O-2__C, I/O_2_E) associées au circuit de sortie et servant de sortie et/ou plusieurs bornes de raccordement associées au circuit d'entrée et servant d'entrée.

5. Interface parallèle variable selon la revendication 4, caractérisée en ce que les bornes de raccordement (I/O_1_C, I/O_1_E) servant de sortie peuvent être rassemblées en circuits ET et/ou OU.

6. Interface parallèle variable selon l'une des revendications 1 à 5, caractérisée en ce que le fonctionnement des bornes de raccordement (I/O_1_C, I/O_1_E) peut être programmé comme sortie ou entrée.

7. Interface parallèle variable selon l'une des revendications précédentes, caractérisée en ce que la liaison du circuit de sortie et d'entrée est constituée de telle façon que lors de l'utilisation de l'interface parallèle variable comme circuit de sortie (OI, R1, 3, R2), le signal appliqué à la borne de sortie (I_1) du circuit d'entrée (O2, R3, R4, R5, Z, ZD) peut être utilisé pour contrôler le circuit de sortie (O1, R1, 3,

R2).

Figur 1

Figur 2

+24V

I/O_1_C

I/O_1_E

Figur 3a

+24 V

I/O_1_C

I/O_1_E

I/O_2_C

I/O_2_E

Figur 3b

+24V

I/O_1_C

I/O_1_E

I/O_2_C

I/O_2_E

Figur 3c

Figur 4

EP 0 285 814 B1

Figur 5

EP 0 285 814 B1